# EUROPÄISCHE PATENTANMELDUNG

(11) **EP 1 473 478 A1**
(43) Veröffentlichungstag der Anmeldung: **03.11.2004**
(21) Anmeldenummer: 03009585.5
(22) Anmeldetag: 29.04.2003
(51) Int. Cl.: F16D 13/64

(54) **Durchflussnutenanordnung für Reibbelag und Reiblamelle**

(71) Anmelder: BorgWarner, Inc., Auburn Hills, MI 48326-1782 (US)
(72) Erfinder: Fabricius, Emilio, 68723 Oftersheim (DE)
(74) Vertreter: Neunert, Peter Andreas

(57) **Zusammenfassung**

Die Erfindung betrifft einen Reibbelag (2) für eine Reiblamelle (1) eines Drehmoment-Übertragungsaggregats mit wenigstens einer Durchgangsnut (36), welche eine in sich geschlossene Verbindung darstellt oder welche eine durchgehende Verbindung (39a,39b) zwischen einer äußeren und / oder einer inneren Berandung (3,4) herstellt. Erfindungsgemäß ist wenigstens eine Verbindungsnut (37) vorgesehen, welche keine in sich geschlossene Verbindung darstellt und bei der eine durchgehende Verbindung (40a,40b) zwischen der äußeren und / oder der inneren Berandung (3,4) nur über wenigstens eine Durchgangsnut(36) hergestellt ist.

## Beschreibung

Die Erfindung betrifft einen Reibbelag für eine Reiblamelle eines Drehmoment-Übertragungsaggregats, insbesondere einer Schaltkupplung, einer Anfahrkupplung oder einer Bremse.

Lamellen-Kupplungen, anhand derer nachfolgend der prinzipielle Aufbau von Drehmoment-Übertragungsaggregaten der vorstehend genannten Art beschrieben wird, umfassen eine Mehrzahl von Lamellen. Eine erste Gruppe dieser Lamellen ist auf einem Außenlamellenträger drehfest angeordnet. Eine zweite Gruppe ist auf einem Innenlamellenträger drehfest angeordnet. Die Lamellen der beiden Gruppen greifen verzahnungsartig, ein Lamellenpaket bildend ineinander. Die beiden Gruppen sind in axialer Richtung relativ zu einander verschiebbar und dabei paarweise in reibschlüssigen Eingriff und außer Eingriff vorbringbar.

Die ringförmigen Lamellen derartiger Lamellenkupplungen sind im allgemeinen sandwichartig aufgebaut. Sie umfassen ein Trägerblech, das beispielsweise aus Stahl besteht. Das Trägerblech trägt auf seinen Ringflächen einen Reibbelag. Dieser besteht im allgemeinen aus einer Faserstoffmasse, mit Füllstoffen und Harze verfestigt wird und im Rohzustand überwiegend auf Papiermaschinen hergestellt wird.

Es gibt jedoch auch Lamellenkupplungen, bei denen die Lamellen einstückig, vorzugsweise aus einem besonderen Reibmaterial hergestellt sind.

Nachfolgend werden alle als Reibflächen dienenden Oberflächen als Reibbeläge bezeichnet. Ob diese Reibbeläge nun mit dem Trägermaterial einstückig ausgeführt sind oder ob diese auf einen separaten Träger aufgebracht sind, spielt keine Rolle.

Um den Drehmomentverlauf beim Schalten derartiger Lamellenkupplungen gezielt einzustellen, weisen die Reibbeläge der Lamellen eine Rillierung oder Nutung auf. Beispiele hierfür sind beispielsweise der DE 28 54 051 A1 zu entnehmen. Häufig findet die sog. Waffelnutung Anwendung, welche beispielsweise in der US 4,280,609 detailliert beschrieben ist.

Bei neuen Automatikgetrieben sind von den Reibkupplungen immer größere Leistungen zu übertragen. Gleichzeitig wird das für die Kühlung während des Schaltvorganges benötigte Getriebeöl permanent reduziert, um mit leistungsschwächeren Ölpumpen den Wirkungsgrad der Automatikgetriebe anzuheben.

Um den Wirkungsgrad zu erhöhen, ist ein sehr dünner Ölfilm zwischen den Reibpartnern einer Kupplung wünschenswert. Andererseits wird zur Leistungssteigerung möglichst viel Öl benötigt.

Gemäß dem betriebsinternen Stand der Technik hat man bisher diesen beiden Anforderungen - soweit möglich - mit hochporösen Belägen entsprochen. Diese Beläge sind in der Lage schnell Öl in ihre Oberfläche aufzunehmen und dann beim Schalten mit höheren Drücken wieder abzugeben.

Obwohl sich derartige Lamellen dem Grunde nach bewährt haben, ist eine Verbesserung der mechanischen Festigkeit wünschenswert. Darüber hinaus ist eine weitere Reduzierung der Reibzahlabhängigkeit vom Druck wünschenswert.

Die Aufgabe der vorliegenden Erfindung besteht nunmehr darin, einen Reibbelag für die Reiblamellen eines Drehmomentübertragungsaggregats vorzustellen, bei dem das Schleppmoment des Drehmoment-Übertragungsaggregats gegenüber einem Drehmoment-Übertragungsagregat mit Reiblamellen, deren Reibbeläge eine Waffelnutung aufweisen, deutlich reduziert ist.

Diese Aufgabe wird durch einen Reibbelag mit den Merkmalen des Patentanspruchs 1 gelöst. Vorteilhafte Ausführungen und Weiterbildungen der Erfindung sind in den Unteransprüchen angegeben.

Ausgehend von einem Reibbelag mit wenigstens einer Durchgangsnut, welche eine in sich geschlossene Verbindung darstellt oder welche eine durchgehende Verbindung zwischen einer äußeren und / oder einer inneren Berandung herstellt, ist erfindungsgemäß wenigstens eine Verbindungsnut vorgesehen, welche einerseits keine in sich geschlossene Verbindung darstellt und bei der darüber hinaus eine durchgehende Verbindung zwischen der äußeren und / oder der inneren Berandung nur über wenigstens eine der Durchgangsnuten hergestellt ist. Durch das erfindungsgemäße Nutbild ist es möglich, auch bei Reibmaterialien mit normaler Porosität eine deutliche Schleppmomentreduktion des Drehmoment-Übertragungsaggregats im kritischen Drehzahlbereich zu erhalten.

Die Kombination von Durchgangsnuten und Verbindungsnuten ermöglicht einen direkten Öldurchfluss und stellt damit sicher, dass sich stets ein dünner Ölfilm zwischen den Reibflächen befindet. Darüber hinaus werden durch diese Anordnung der Nuten kleine Ölspeicherräume geschaffen, in welchen kein ständiger Ölfluss möglich ist, über die aber während einer Leistungsschaltung Wärme abgeführt werden kann.

Der Öldurchfluss kann durch die konkrete geometrische Anordnung der Verbindungsnuten und der Durchgangsnuten eingestellt werden. So ist es beispielsweise möglich, dass Verbindungsnuten ausschließlich eine Verbindung zwischen zwei benachbarten Durchgangsnuten herstellen oder dass eine Verbindungsnut mehrere benachbarte Durchgangsnuten überspannt.

Die Ölaufnahmekapazität kann durch die Anzahl der die beiden Durchgangsnuten verbindenden Verbindungsnuten variiert werden. Weiterhin hängt diese auch von dem Verhältnis der Tiefe der Verbindungsnut zur Durchgangsnut ab. Selbstverständlich ist eine Einstellung der Aufnahmekapazität auch durch die Wahl der jeweiligen Nutbreiten möglich. Insbesondere ist daher erfindungsgemäß vorgesehen, dass die Verbindungsnuten über deren jeweiligen Längserstreckung eine unterschiedliche Breite und / oder eine unterschiedliche Tiefe aufweisen.

Weitere Variationsmöglichkeiten zur Einstellung der Ölaufnahmekapazität und des Öldurchflusses liegen in der Wahl des besonderen Verlaufs der Verbindungsnuten. So können beispielsweise auch Nuten zur Anwendung kommen, welche einen gekrümmten oder einen geknickten Verlauf aufweisen. Die Richtung der Krümmung oder Knickung in bezug auf die Drehrichtung legt insbesondere die Speicherkapazität des Öls auf dem Reibbelag fest.

Die Erfindung wird nunmehr anhand der Zeichnungen näher erläutert. Es zeigen
- Figur 1: eine erstes Ausführungsbeispiel einer Reiblamelle mit erfindungsgemäßer Belagnutung bestehend aus radial verlaufenden Durchgangsnuten und linear verlaufenden Verbindungsnuten.
- Figur 2: ein zweites Ausführungsbeispiel der Reiblamelle mit erfindungsgemäßer Belagsnutung, namlich mit einer Vielzahl ein sogenanntes Seriennutbild darstellenden Durchgangsnuten und linear verlaufenden Verbindungsnuten.
- Figur 3: ein drittes Ausführungsbeispiel einer Reiblamelle mit erfindungsgemäßer Belagnutung bestehend aus radial verlaufenden Durchgangsnuten und einfach geknickten Verbindungsnuten.
- Figur 4: ein viertes Ausführungsbeispiel einer Reiblamelle mit einer Belagnutung in der Art eines Backsteinnutbildes.
- Figur 5: ein fünftes Ausführungsbeispiel einer Reiblamelle mit erfindungsgemäßer Belagnutung bestehend aus radial verlaufenden Durchgangsnuten und konzentrisch gekrümmten Verbindungsnuten.
- Figur 6: ein sechstes Ausführungsbeispiel einer Reiblamelle mit erfindungsgemäßer Belagnutung bestehend aus einer ringförmig geschlossenen und konzentrisch verlaufenden Durchgangsnut und einer Mehrzahl radial verlaufender Verbindungsnuten.
- Figur 7: ein siebentes Ausführungsbeispiel einer Reiblamelle mit erfindungsgemäßer Belagnutung bestehend aus radial verlaufenden Durchgangsnuten und linear verlaufenden, eine kreisförmige Verdickung aufweisenden Verbindungsnuten.
- Figur 8: ein achtes Ausfuhrungsbeispiel einer Reiblamelle mit erfindungsgemäßer Belagnutung bestehend aus radial verlaufenden Durchgangsnuten und im wesentlichen linear verlaufenden, in der Dicke variierenden Verbindungsnuten.
- Figur 9: einen Vergleich der Drehzahlabhängigkeit des Schleppmomentes von Lamellenkupplungen mit unterschiedliche Belagnutungen aufweisenden Lamellen.
S: Die Lamellen weisen Reibbeläge mit einem Waffelnutbild auf.
E: Die Lamellen weisen Reibbeläge mit erfindungsgemäßem Backsteinnutbild auf.

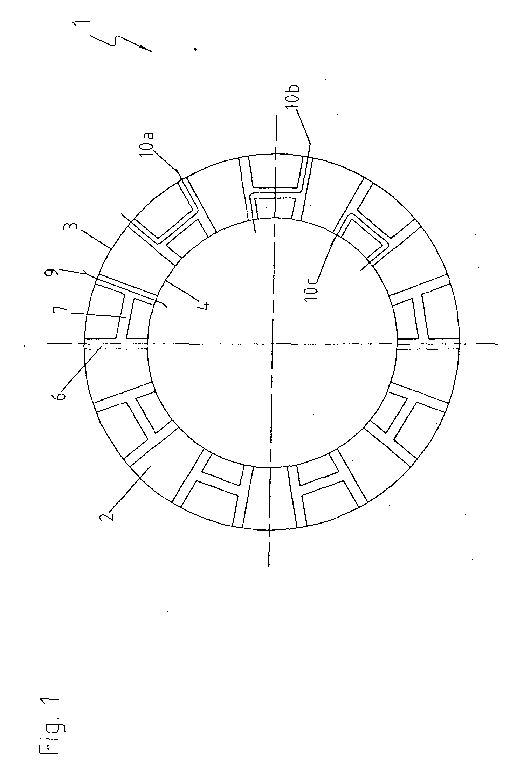

Die in den Figuren 1 bis 8 in identischer Form vorliegenden Bestandteile einer Reiblamelle sind in allen Figuren einheitlich mit denselben Bezugszeichen versehen. Demnach sind alle Reiblamellen 1 ringförmig ausgebildet. Auf deren Oberfläche befindet sich jeweils ein Reibbelag 2, welcher durch eine konzentrische äußere Berandung 3 und eine konzentrische innere Berandung 4 begrenzt ist.

Bei dem in der Figur 1 dargestellten Ausführungsbeispiel verlaufen alle Durchgangsnuten 6 in radialer Richtung und erstrecken sich jeweils von der inneren Berandung 4 bis zur äußeren Berandung 3. Dadurch wird eine durchgehende Verbindung zwischen der inneren Berandung 4 und der äußeren Berandung 3 geschaffen, welche in der Zeichnung Figur 1 durch das Bezugszeichen 9 gekennzeichnet ist.

Zwischen zwei benachbarten Durchgangsnuten 6 befindet sich eine diese beiden Durchgangsnuten 6 verbindende Verbindungsnut 7. Diese Verbindungsnut 7 verläuft im wesentlichen linear. Eine einen Ölfluss ermöglichende durchgehende Verbindung über diese Verbindungsnut 7 ist somit allein über die in der Figur 1 mit den Bezugszeichen 10 a, 10 b und 10 c gekennzeichneten Verbindungswege möglich. Hier ist stets eine der vorerwähnten Durchgangsnuten 6 involviert.

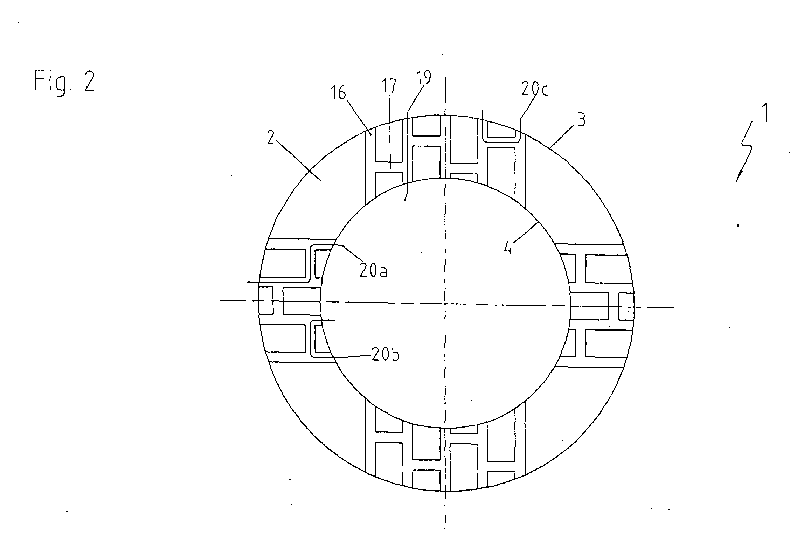

Das in der Figur 2 dargestellte Ausführungsbeispiel weist Durchgangsnuten 16 auf, welches eine weitere Variante darstellen. Die Durchgangsnuten 16 stellen jeweils wiederum eine durchgehende Verbindung 19 zwischen der inneren Berandung 4 des Reibbelags 2 und der äußeren Berandung 3 des Reibbelags 2 her, über welche ein Ölfluss möglich ist. Weiterhin sind Verbindungsnuten 17 vorgesehen, welche ähnlich wie im vorhergehenden Beispiel jeweils zwei benachbarte Durchgangsnuten 16 miteinander verbinden. Die Verbindungsnuten 17 sind wie im vorstehenden Fall derart angeordnet, dass eine durchgehende Verbindung 20a, 20b und 20 c zwischen der äußeren und /oder der inneren Berandung 3,4 nur über wenigstens eine Durchgangsnut 16 hergestellt ist.

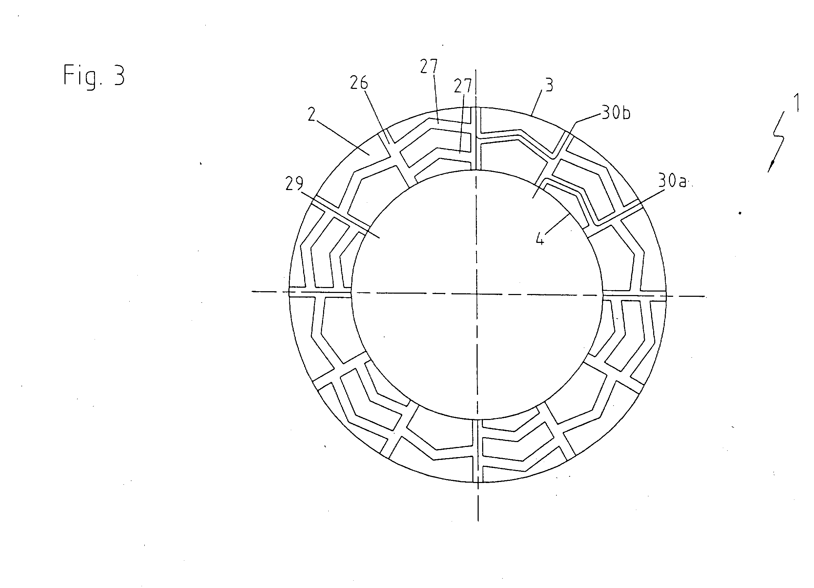

Das in der Figur 3 dargestellte Ausführungsbeispiel unterscheidet sich von dem in der Figur 1 dargestellten Beispiel im wesentlichen dadurch, dass die Verbindungsnuten 27 einfach geknickt verlaufen. Darüber hinaus sind zwischen zwei benachbarten Durchgangsnuten 26 im einen Fall zwei Verbindungsnuten 27 in radialer Richtung hintereinander liegend angeordnet und im andern Fall befindet sich lediglich eine derartige Verbindungsnut 27 zwischen zwei benachbarten Durchgangsnuten 26. Die in Umfangsrichtung benachbart zueinander angeordneten Verbindungsnuten 27 sind in radialer Richtung versetzt zueinander angeordnet. Wie in den vorstehend beschriebenen Ausfuhrungsbeispielen stellt jede Durchgangsnut 26 eine durchgehende Verbindung 29 zwischen der äußeren und der inneren Berandung 3,4 her. Demgegenüber ergibt sich eine durchgehende Verbindung 30a, 30b zwischen der äußeren und / oder der inneren Berandung 3,4 über eine Verbindungsnut 27 nur unter Einbeziehung wenigstens einer Durchgangsnut 26.

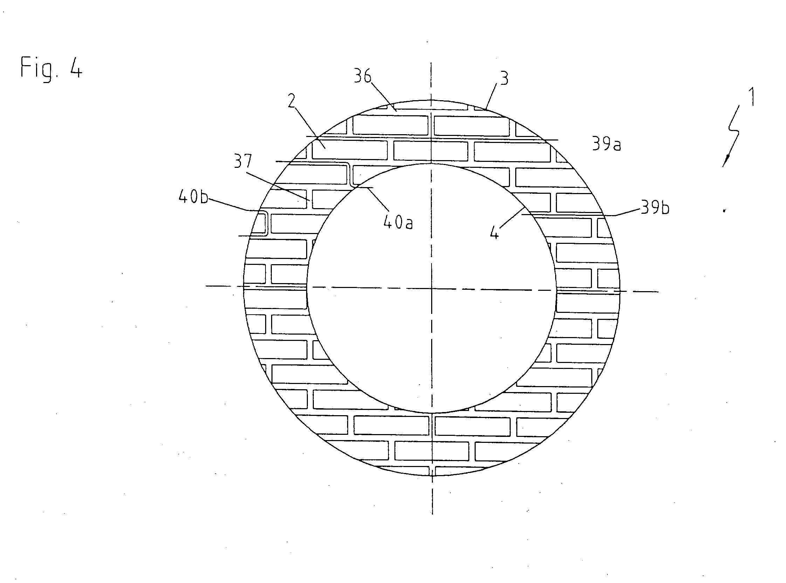

Das in der Figur 4 dargestellte Ausführungsbeispiel stellt eine weitere Ausführungsvariante dar. Diese ist durch geringfügige Modifikation aus einem Waffelnutbild entstanden. Hier sind jedoch Durchgangsnuten 26 und Verbindungsnuten 27 derart angeordnet, dass sie ein backsteinartiges Muster zeigen. Wiederum stellen alle Durchgangsnuten 36 eine durchgehende Verbindung 39a, 39b zwischen einer äußeren und / oder einer inneren Berandung 3,4 her. Demgegenüber verbinden die Verbindungsnuten 37 jeweils zwei benachbarte Durchgangsnuten 36 derart, dass sich eine durchgehende Verbindung 40a, 40b zwischen der äußeren und / oder der inneren Berandung 3,4 nur über wenigstens eine Durchgangsnut 36 ergibt.

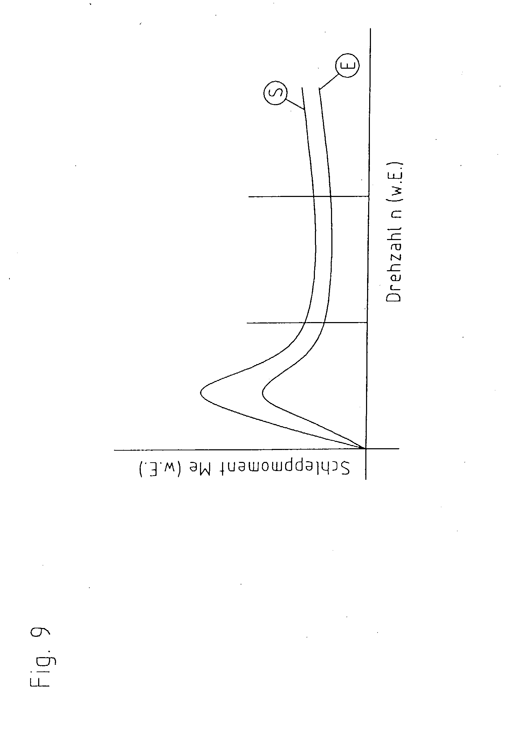

Lamellenkupplungen mit einer derartigen Belagnutung aufweisenden Lamellen 1 wurden eingehenden experimentellen Untersuchungen unterzogen. Die Figur 9 zeigt einen Vergleich der Drehzahlabhängigkeit des Schleppmomentes Mt einer Lamellenkupplung, in der Lamellen 1 mit Reibbelägen 2 eingesetzt sind, welche das vorstehend beschriebene erfindungsgemäße Backsteinnutbild aufweisen, mit der Drehzahlabhängigkeit des Schleppmomentes Mt einer Lamellenkupplung, deren Lamellen Reibbeläge mit einem Waffelnutbild aufweisen.

Der Figur 9 ist zu entnehmen, dass das Schleppmoment Mt einer Lamellenkupplung mit erfindungsgemäßen, nachfolgend mit "E" bezeichneten Lamellen, gegenüber dem Schleppmoment Mt einer Lamellenkupplung mit Lamellen gemäß dem Stand der Technik (Waffelnutbild), nachfolgend mit S bezeichnet, deutlich reduziert ist. Insbesondere ist es mit der erfindungsgemaßen Nut möglich, die Schleppmomentspitze am Anfang signifikant zu reduzieren. Im weiteren, für den Kraftstoffverbrauchrelevanten Drehzahlbereich, wurde ein durchgehend niedrigeres Schleppmoment ermittelt.

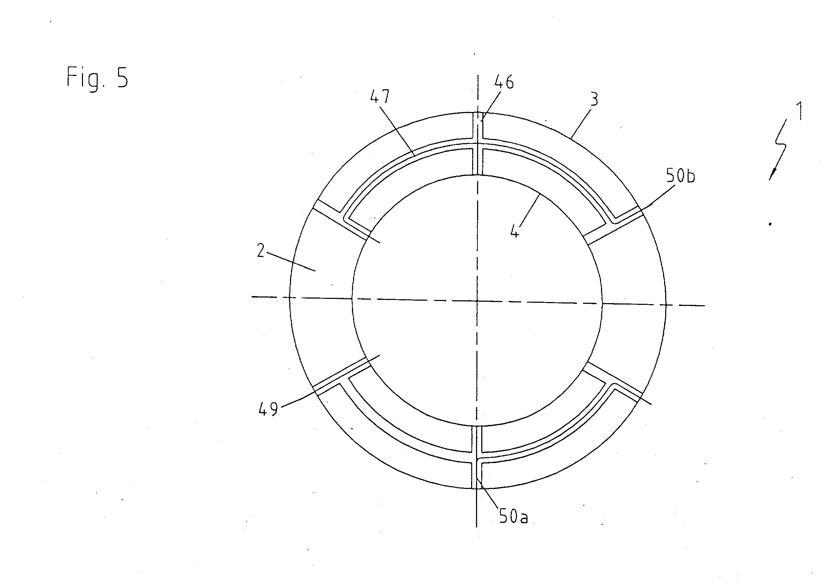

Die Figur 5 zeigt ein weiteres fünftes Ausführungsbeispiel einer Reiblamelle 1 mit erfindungsgemäßer Belagnutung. Bei diesem Ausführungsbeispiel sind wiederum radial verlaufende Durchgangsnuten 46 vorhanden. Im Unterschied zu den Ausführungsbeispielen gemäß den Figuren 1 und 3 überspannt eine Verbindungsnut 47 zwei benachbarte Durchgangsnuten 46. Die Verbindungsnut 47 ist dabei jeweils kreisförmig gekrümmt(Selbstverständlich sind die Verbindungsnuten ebenso radial versetzt und oder überlappend anordenbar).

Wie in den vorstehend beschriebenen Ausführungsbeispielen stellen die Durchgangsnuten 46 jeweils eine durchgehende Verbindung 49 zwischen der äußeren und der inneren Berandung 3,4 her. Unter Einbeziehung der Verbindungsnut 47 ergibt sich eine durchgehende Verbindung 50a, 50b zwischen der äußeren und / oder der inneren Berandung 3,4 nur über wenigstens eine Durchgangsnut 46.

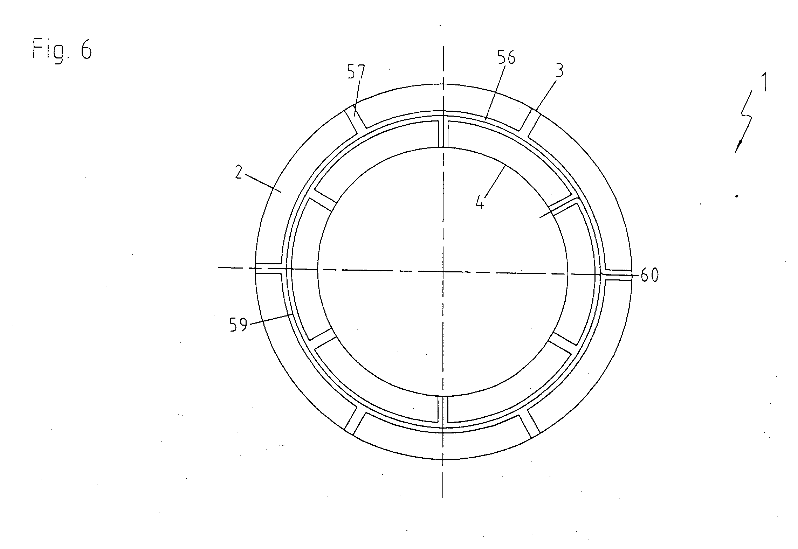

Eine weitere von den vorstehenden Ausführungsbeispielen signifikant abweichende Ausführungsvariante ergibt sich aus der Figur 6. Hier stellt die Durchgangsnut 56 eine in sich geschlossene Verbindung dar, welche konzentrisch zur Ringform der Lamelle 1 verläuft. Eine durchgehende Verbindung 60 über eine Verbindungsnut 57 zwischen der äußeren und der inneren Berandung 3,4 ergibt sich hier nur über die Durchgangsnut 56.

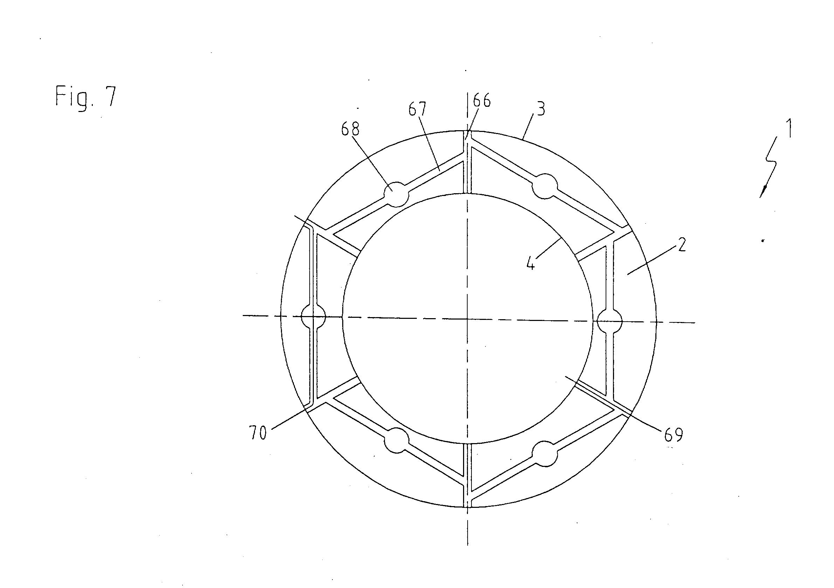

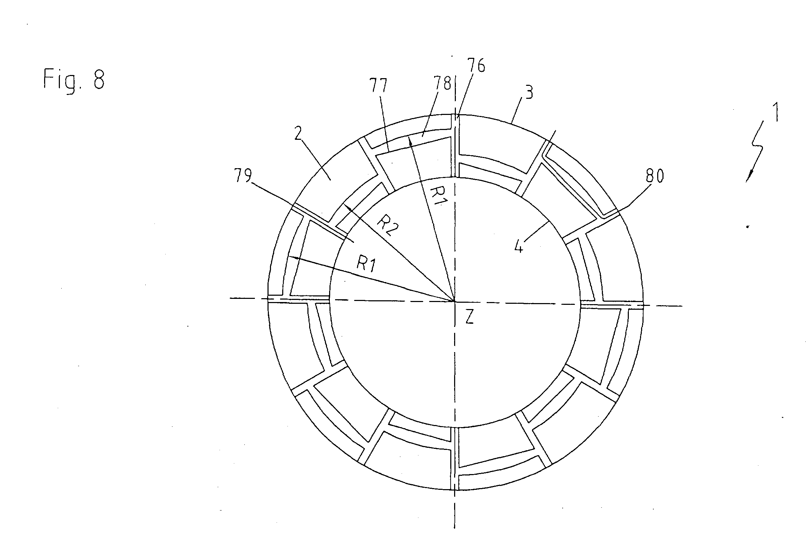

Die beiden Ausführungsbeispiele gemäß den Figuren 7 und 8 weisen jeweils einen Ölfluss ermöglichende, eine durchgehende Verbindung 69, 79 zwischen der äußeren Berandung 3 und der inneren Berandung 4 darstellende Durchgangsnuten 66, 76 auf. Weiterhin sind wiederum entsprechend den Ausführungsbeispielen gemäß den Figuren 1 bzw. 3 Verbindungsnuten 67, 77 vorgesehen, bei denen eine durchgehende Verbindung 70, 80 zwischen der äußeren und / oder der inneren Berandung 3,4 wiederum nur über wenigstens eine Durchgangsnut 67, 77 hergestellt ist. Die Verbindungsnuten 67, 77 zeichnen sich dadurch aus, dass sie längs ihrer Erstreckung keine konstante Breite aufweisen. Bei dem in der Figur 7 dargestellten Ausführungsbeispiel befindet sich etwa in der Mitte eine kreisförmige Verdickung 68. Bei dem in der Figur 8 dargestellten Ausführungsbeispiel ist die dem Zentrum Z zugewandte Nutseite linear ausgeführt, die der äußeren Berandung 3 zugewandte Nutseite ist radial gekrümmt. Die entsprechenden Krümmungsradien sind in der Zeichnungsfigur mittels der Bezugszeichen r₁ bzw. r₂ gekennzeichnet.

Es versteht sich für den Fachmann von selbst, dass neben einer Breitenvariation auch eine Tiefenvariation der jeweiligen Nuten möglich ist.

### Bezugszeichenliste

- 1: Lamelle
- 2: Reibbelag
- 3: äußere Berandung des Reibbelags 2
- 4: innere Berandung des Reibbelags 2

- 5.: radial verlaufende Durchgangsnut
- 6.: lineare Verbindungsnut
- 7.: durchgehende Verbindung
- 10a, 10b, 10c: durchgehende Verbindung

- 16: eine Seriennutbild darstellende Durchgangsnut
- 17.: lineare Verbindungsnut
- 18.: durchgehende Verbindung
- 20a, 20b, 20c: durchgehende Verbindung

- 26: radial verlaufende Durchgangsnut
- 27: einfach geknickte Verbindungsnut
- 29: durchgehende Verbindung
- 30a, 30b: durchgehende Verbindung

- 36: parallel angeordnete Durchgangsnut
- 37: lineare Verbindungsnut
- 39a, 39b: durchgehende Verbindung
- 40a, 40b: durchgehende Verbindung

- 46: radial verlaufende Durchgangsnut
- 47: gekrümmte Verbindungsnut
- 49: durchgehende Verbindung
- 50a, 50b: durchgehende Verbindung

- 56: ringförmig geschlossene Durchgangsnut
- 57: lineare Verbindungsnut
- 59: in sich geschlossene Verbindung
- 60: durchgehende Verbindung

- 66: radial verlaufende Durchgangsnut
- 67: lineare Verbindungsnut
- 68: kreisförmige Verdickung
- 69: durchgehende Verbindung
- 70: durchgehende Verbindung

- 76: radial verlaufende Durchgangsnut
- 77: im wesentlichen lineare Verbindungsnut
- 78: Verdickung
- 79: durchgehende Verbindung
- 80: durchgehende Verbindung

- r₁: Radius
- r₂: Radius

- Z: Zentrum
- n: Drehzahl

- A: Mischreibungsbereich
- B: Gleitreibungsbereich
- C: Trockenreibungsbereich

- S: Stand der Technik
- E: Erfindung

## Patentansprüche

1. Reibbelag (2) für eine Reiblamelle (1) eines Drehmoment-Übertragungsaggregats
- mit wenigstens einer Durchgangsnut(6,16,26,36,46,56,66, 76), welche eine in sich geschlossene Verbindung (59) darstellt oder welche eine durchgehende Verbindung (9,19,29,39a,39b,49,69,79) zwischen einer äußeren und / oder einer inneren Berandung (3,4) herstellt.
**dadurch gekennzeichnet, dass**
- wenigstens eine Verbindungsnut (7, 17, 27, 37, 57, 67, 77) vorgesehen ist, welche keine in sich geschlossene Verbindung darstellt und bei der eine durchgehende Verbindung (10a,10b,10c,20a,20b,20c,30a,30b,40a,40b,50a,50b,60,70,80) zwischen der äußeren und / oder der inneren Berandung (3,4) nur über wenigstens eine Durchgangsnut (6,16,26,36,46,56,66,76) hergestellt ist.

2. Reibbelag (2) nach Anspruch 1,
**dadurch gekennzeichnet, dass**
die Verbindungsnut (7,17,27,37,67,77) ausschließlich eine Verbindung zwischen zwei benachbarten Durchgangsnuten (6,16,26,36,66,76) herstellt.

3. Reibbelag (2) nach Anspruch 1,
**dadurch gekennzeichnet, dass**
die Verbindungsnut (47) mehrere benachbarte Durchgangsnuten (46) überspannt.

4. Reibbelag (2) nach Anspruch 2 oder 3,
**dadurch gekennzeichnet, dass**
mehrere, dieselben beiden Durchgangsnuten (26,36) verbindende Verbindungsnuten (27,37) vorgesehen sind.

5. Reibbelag (2) nach einem der vorangegangenen Ansprüche,
**dadurch gekennzeichnet, dass**
die Verbindungsnut eine von der Durchgangsnut abweichende Tiefe aufweist.

6. Reibbelag (2) nach einem der vorangegangenen Ansprüche,
**dadurch gekennzeichnet, dass**
die Verbindungsnut (67,77) über deren Erstreckung eine unterschiedliche Breite und / oder eine unterschiedliche Tiefe aufweist.

7. Reibbelag (2) nach einem der vorangegangenen Ansprüche,
**dadurch gekennzeichnet, dass**
die Verbindungsnut (27,47,77) einen gekrümmten oder geknickten Verlauf aufweist.

8. Reiblamelle (1) mit einem Reibbelag (2) gemäß einem der vorangegangenen Ansprüche
